Europäisches Patentamt

**European Patent Office**

**Office européen des brevets**

(11) Publication number: **0 117 638**
**A1**

## (12) EUROPEAN PATENT APPLICATION

(21) Application number: **84300513.3**

(22) Date of filing: **27.01.84**

(51) Int. Cl.³: **E 02 B 3/14, E 01 C 5/06**

(30) Priority: **28.01.83 GB 8302446**

(43) Date of publication of application: **05.09.84**
**Bulletin 84/36**

(84) Designated Contracting States: **AT BE CH DE FR IT LI
LU NL SE**

(71) Applicant: **Hodson, Christopher Douglas, 65, Romilly
Road Thompson's Park, Cardiff, CF5 1FL Wales (GB)**

(72) Inventor: **Hodson, Christopher Douglas, 65, Romilly Road
Thompson's Park, Cardiff, CF5 1FL Wales (GB)**

(74) Representative: **Hill, Cecilia Ann et al, Abel & Imray
Northumberland House 303-306 High Holborn, London,
WC1V 7LH (GB)**

(54) **Improvements in or relating to paving blocks.**

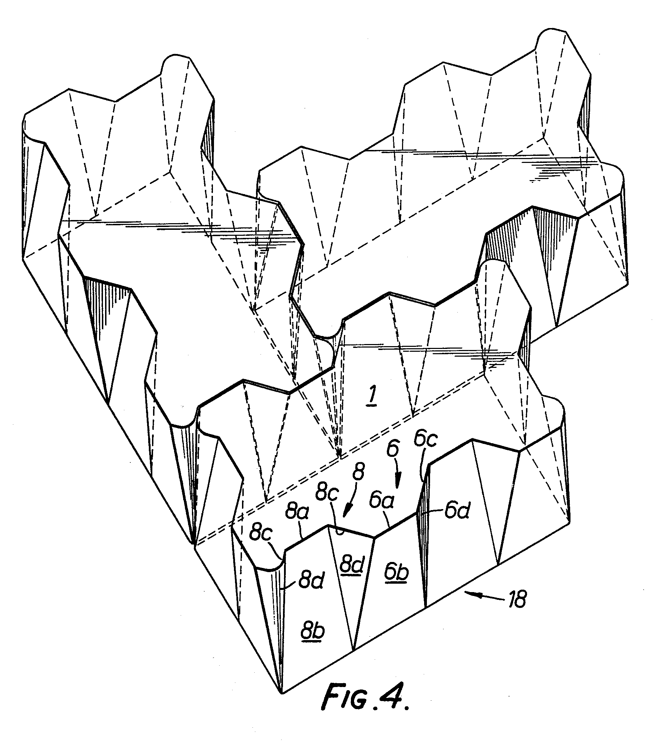

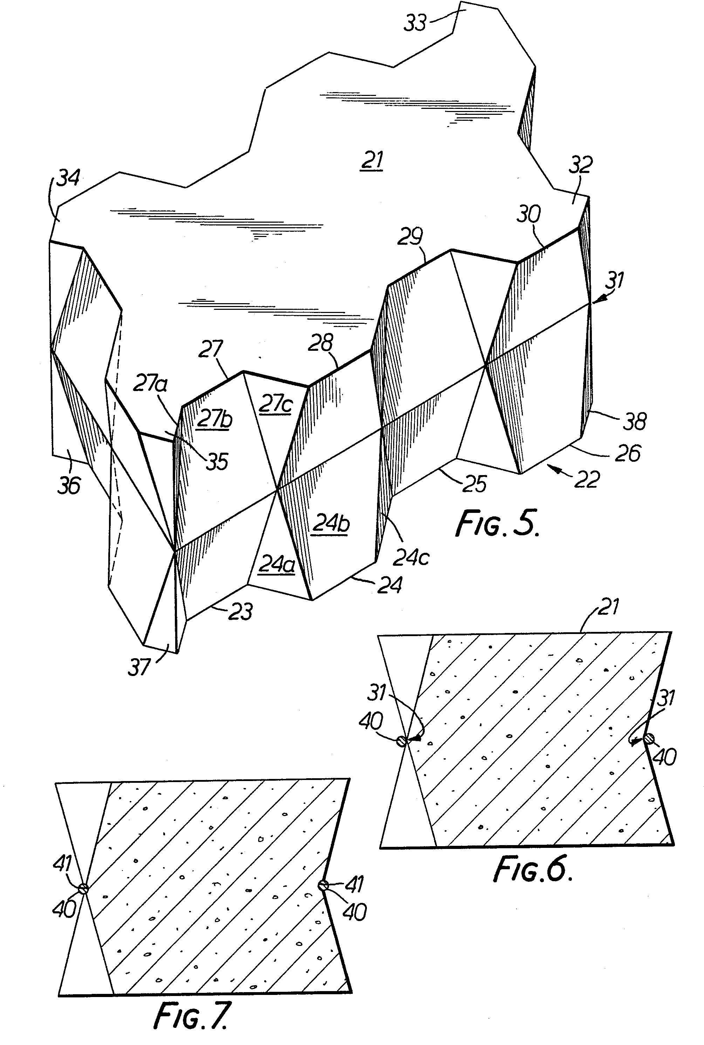

(57) A paving block, particularly for use in constructing revetments, is configured so that a three-dimensional interlock is obtained between adjacent blocks. At least one face (1, 21) of the block has an edge contour comprising alternate recesses (2, 3 etc.) and projections (4, 5 etc.). The side walls of the block comprise inclined faces (8b, 8d etc.) which, in one form of the block (Fig. 4) join the edges of the recesses and projections to the edges of the opposite face (18) of the block, which is rectangular. In another form of the block (Fig. 5), the inclined faces (27a, 27b etc.) join the edges of the recess and projections to a rectangular contour (31) located midway between the two faces (21, 22) of the block. These blocks may be roped together to form a mat by cables (40) running between adjacent mats along the edges of the rectangular contours (31).

EP 0 117 638 A1

## "Improvements in or relating to Paving Blocks"

This invention relates to paving blocks such as are used to pave areas of ground and has particular reference to blocks for use in the construction of revetments for the protection of river banks, sea walls and the like from erosion.

Paving blocks are usually configured so that they can be interlocked during laying to impart stability in two dimensions over the paved surface to resist lateral forces. However, the interlocking is required to be such that some degree of relative vertical movement between adjacent blocks is required to avoid cracking which might otherwise occur.

Blocks for use in the construction of revetments should also be able to withstand vertical pressures and thus a three-dimensional interlock between adjacent blocks is desirable.

Accordingly, it is an object of the present invention to provide a paving block contoured to enable it to interlock effectively in three dimensions and which is also of relatively simple design. It is a further object to provide a mat of paving blocks which can be prefabricated in a relatively simple manner for use in, for example, the construction of revetments.

According to the present invention, a paving block has a first face of generally rectangular form with an edge contour comprising alternate straight-edged recesses and projections; the block also having, in a plane parallel to the first face, a rectangular contour located centrally with respect to the first face; the side walls of the block comprising a series of inclined faces joining the edges of the recesses and projections to the edges of the rectangular contour.

The rectangular contour may be the edge contour of a second face of the block.  Alternatively, the
rectangular contour may be located in a plane intermediate
the first face and a second face of the block.  In this
case, the edge contours of the first and second faces
are preferably the same.

The alternative form of block may be used to form a
paving mat in which the blocks are roped together by at least
one cable which extends along an edge of the rectangular
contour of a block.

The invention further provides a paving mat comprising a plurality of blocks roped together by at least one
cable which extends along one side of at least a pair of
adjacent blocks.

By way of example only, blocks embodying the
invention and suitable for use in the construction of
revetments will now be described in greater detail with
reference to the accompanying drawings of which:-

Figs. 1 and 2 are plan views of a first block;

Fig. 3 is a section on the line III-III of Fig. 1;

Fig. 4 is a perspective view of several of the
blocks laid in interlocking engagement;

Fig. 5 is a perspective view of a second block;

Fig. 6 is a section, corresponding to that of
Fig. 3, through the block of Fig. 5;

Fig. 7 illustrates a modification of Fig. 6, and

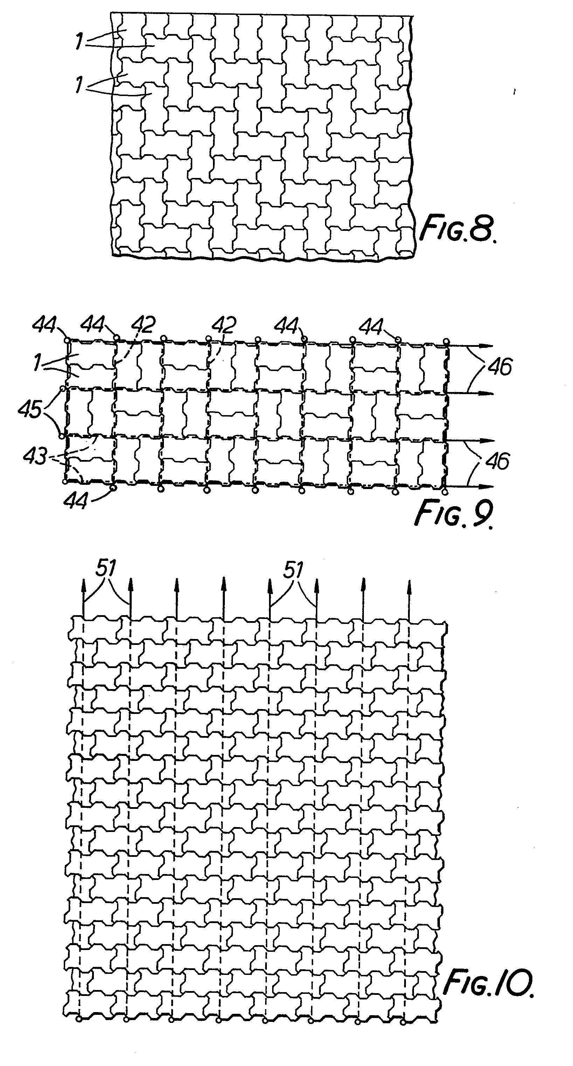

Figs. 8 to 10 illustrate arrays of blocks in
accordance with the invention.

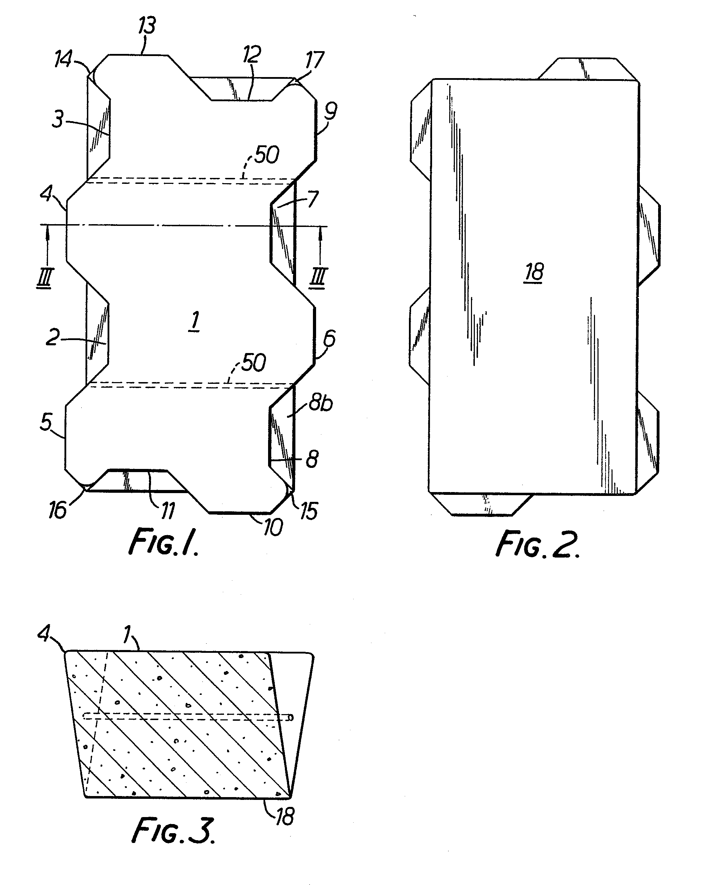

The block shown in Figs. 1, 2 and 3 has a first,
flat face 1 of generally rectangular form but whose
edge contour is of the form described in U.K. Patent
Specification No. 1,520,274.

The face 1 has one edge with outwardly-flared
recesses 2, 3 separated by an inwardly-flared projection
4.  The recess is bounded by a further inwardly-flared
projection 5.

The opposite edge has an inwardly-flared projection 6 that lies opposite recess 2 and that is bounded
by outwardly-flared recesses 7, 8 that lie opposite

- 3 -    0117638

projections 4 and 5 respectively.  On the other side
of recess 7 from projections 6 is a further inwardly-
flared projection 9.

The face 1 also has an end edge with an inwardly-
flared projection 10 adjacent an outwardly-flared recess
11.  The other end edge of the face 1 has an outwardly-
flared recess 12 that lies opposite projection 10 and an
inwardly-flared projection 13 that lies opposite to recess 11.

As can be seen from Fig. 1, recesses 3, 8, 11 and
12 are each bounded on one side by projections 14, 15, 16
and 17 respectively, such projections being, in effect,
continuations of projections 13, 10, 5 and 9 respectively.
Projections 14.....17 are rounded as shown.

The opposite face 18 of the block is of rectangular form whose corners lies centrally beneath the rounded
projections 14.....17.

Between the faces 1, 18 of the block, the side
walls are contoured to provide inwardly inclined faces
linking the flat outer ends of the projections 4, 5, 6, 9,
10 and 13 with the edges of the rectangular face 18 and
outwardly-inclined faces linking the flat inner ends of the
recesses 2, 3, 7, 8, 11 and 12 with those edges.

The perspective view of Fig. 4 shows the inclined
faces and it will be observed that each increases in width
from the edges of face 1 to the edges of face 18.  This
is because the edges of the face 18 lie midway between
the flat outer and inner ends of the projections and recesses
of the edge of the front face 1.  Thus, the flared sides
of the projections and recesses of the edges of the
front face give rise to triangular shaped surfaces between
those edges.

Referring to Fig. 4, the inner end 8a of recess
is joined by an inclined face 8b to the edge of the
face 18.  The outer end 6a of the adjacent projection 6
is joined by an inclined face 6b to the edge of the
face 18.  Faces 6b and 8b are trapezoidal and increase

- 4 -                    0117638

in width from edges 6a and 8b respectively to the edge
of face 18.

The flared sides 8c of recess 8 are joined by
inclined faces 8d of inverted triangular shape to the
edge of the face 18. Similarly, the flared sides 6c,
8c of projection 6 are joined by inclined faces 6d of
inverted triangular shape to the edge of face 18.

As has been stated above, the corners of face
18 lie centrally beneath the rounded projections 14...17
and the sides of the rectangular face, when the block
is viewed as in Fig. 1, lie along lines that bisect the
flared sides of the recesses and projections of the edge
contour of the face 1. Thus, faces 8b and 6b are
oppositely inclined.

In like manner, the inner ends, flared sides and
outer ends of the remaining recesses and projections of
the edge contour of the face 1 are joined to edges of
face 18 by inclined faces.

Thus, when laid on a flat surface, adjacent
blocks are interlocked by the interengaging projections
and recesses to give two-dimensional stability to
resist lateral faces and by the interengaging inclined
faces between faces 1 and 18 to give stability in the
third dimension so that the blocks will resist both
upward and downward forces. In practice, there will be
nominal gaps between the interengaging projections,
recesses and inclined faces of adjacent blocks but this
will not prevent interlocking of the blocks to resist
the forces described.

Figs. 1 and 3 indicate that conduits 50 may be
formed in the blocks. The purpose of these conduits
is described below.

The block shown in Fig. 6 is similar to that
shown in Figs. 1 to 3 but, instead of having one face of
rectangular form, both faces 21,22 are of generally
rectangular form with an edge contour of the form described in U.K. Patent Specification No. 1,520,274. The edge contours of the two faces 21,22 coincide when the block is viewed from above, that is the flared recesses and projections (such as 23,24,25,26) of the lower face 22 are located directly below corresponding flared recesses and projections (27,28,29,30 respectively) of the upper face 21.

In a plane midway between the two faces 21, 22 and parallel thereto, the block has a rectangular contour 31. The corners of the rectangle lie centrally beneath the end projections 32 to 35 of the face 21, in the manner described for the rectangular face 18 of Figs. 1 to 3, and centrally above the corresponding end projections (of which only 36 to 38 can be seen in Fig. 5) of the face 22.

The edges of the recesses and projections (such as 23 to 30) of both faces 21, 22 of the block are all joined by inclined faces to the rectangular contour 31 exactly in the manner already described for the block of Figs. 1 to 3. In the case of projection 24 of the face 22, for example, these inclined faces are indicated at 24a, 24b and 24c and in the case of recess 27 of the face 21 they are indicated at 27a, 27b and 27c.

It will be seen that, from above, this second block has the same plan view as the first block, shown in Fig. 1. Blocks of the type shown in Fig. 5 will also interlock effectively in three dimensions when laid on a flat surface and both forms of block can be used in the construction of revetments on river banks and sea shores for example. The blocks may be laid individually in which case a sloping base is prepared with, if necessary, a toe beam of concrete supported by piles. The blocks are then laid upon the prepared surface in interlocked configuration, the interlocking surfaces of adjacent

- 6 -    0117638

blocks being in contact. The blocks may be laid in any suitable configuration although a herringbone pattern as illustrated in Fig. 8 is particularly stable.

Alternatively, in the construction of a revetment it may be preferable to incorporate cables between the blocks as they are being laid or, indeed, to lay the blocks in the form of mats, each mat comprising a number of blocks roped together by a non-corrosive cable system. In the latter case, the pre-assembled mats are laid on the prepared sloping base, using a crane, and secured to anchor points at the top of the revetment.

The block shown in Fig. 5 is particularly suitable for use with cable in either of these ways because the nominal gap between adjacent blocks always runs in a straight line at the mid-plane of the blocks providing, effectively, a channel through which a cable system can pass. This is illustrated in Fig. 6 which shows a section through a block with a cable 40 running lengthwise on either side adjacent the rectangular contour 31. If desired, the block could be modified as illustrated in Fig. 7 by the provision of a groove 41 on either side specifically to accommodate the cables and, a cable could, similarly, run widthwise of the block either in addition to, or as an alternative to the cable 40.

One suitable configuration of the blocks when used with a cable system is illustrated in Fig. 9. In this case, the blocks are laid in alternating pairs and a system of cables 42,43 runs both lengthwise and widthwise between the pairs. As can be seen, the set of parallel cables 42 extending in one direction is anchored, at points 44, on each side of the array of blocks while the cables 43 extending in the other direction are anchored, at points 45, at one end only with the other ends 46 of the cables being free. The mat of cables which is formed in this way can be prefabricated, laid in place by a crane and subsequently secured by attaching the free cable ends 46 to anchor points. Alternatively, if desired, a cable system such as that (42,43) illustrated in Fig. 9 can be incorporated when blocks are laid in place by hand.

However, blocks need not be roped together in the manner illustrated in Figs. 6 and 7 but could, for example, be formed with one or more conduits therethrough, through which the cable system is passed. Such conduits are indicated at 50 in Figs. 1 and 3, for example, and could similarly be included in the block of Figs.5 and 6 but would, of course, be omitted if not required. Fig. 10 illustrates, by way of example, an array of blocks roped together by cables 51 which pass through the blocks and a mat of blocks prefabricated in this manner could be laid in place by crane as already described.

A preassembled mat may be of any appropriate size, depending on the location in which it is to be laid and the equipment available for handling it. The use of preassembled mats is particularly advantageous when a revetment is being constructed under water or when it is not possible to provide an adequate toe beam support for the blocks to be laid individually.

The blocks described above can also be used to pave horizontal surfaces where the three dimensional stability referred to above is required.

The blocks are made from concrete, a suitable mix being.

| 1 | part cement |
| 1½ | parts aggregate |
| 3 | parts sand |

and are formed in moulds using standard production techniques. The top surface of the blocks may have a smooth flat finish or a profiled finish or, if required, a rough finish provided, for example, by incorporating unbroken stones.

The overall block dimensions and the degree of inclination of the inclined faces will depend upon the use to which the blocks are to be put. It is also possible to vary the shape of the alternate projections and recesses in the edge contour of the faces 1, 21 and 22 of the blocks and also the number of those projections and recesses without destroying the three-dimensional interlock between adjacent blocks. Moreover, in the block of Fig. 5 it is not essential for the lower half of the block to be a mirror image of the upper half to enable the desired three-dimensional interlock to be obtained, nor for the rectangular contour 31 to be midway between the faces 21,22 of the block, although the symmetry simplifies both the design and use of the block.

0117638

CLAIMS:

1.      A paving block having a first face of generally rectangular form with an edge contour comprising alternate straight-edged recesses and projections; the block also having, in a plane parallel to the first face, a rectangular contour located centrally with respect to the first face; the side walls of the block comprising a series of inclined faces joining the edges of the recesses and projections to the edges of the rectangular contour.

2.      A paving block as claimed in claim 1, in which the rectangular contour is the edge contour of a second face of the block.

3.      A paving block as claimed in claim 1, in which the rectangular contour is located in a plane intermediate the first face and a second face of the block.

4.      A paving block as claimed in claim 3, in which the plane is midway between the first and second faces.

5.      A paving block as claimed in claim 3 or claim 4, in which the second face is of generally rectangular form with an edge contour comprising alternate straight-edged recesses and projections; the rectangular contour also being located centrally with respect to the second face, and the side walls of the block further comprising a series of inclined faces joining the edges of the recesses and projections of the second face to the edges of the rectangular contour.

6.      A paving block as claimed in any one of claims 3 to 5, in which the edge contours of the first and second faces are the aame.

7.      A paving block as claimed in any one of the preceding claims, in which the recesses are outwardly-flared and the projections are inwardly-flared.

8.      A paving block as claimed in any one of the preceding claims, in which the or each series of inclined faces comprises alternate trapezoidal and triangular faces.

9.      A paving mat comprising a plurality of blocks each as claimed in any one of the preceding claims ; the blocks being arranged with the side walls interlocking and with the first faces of the blocks in one plane, and being roped together.

10.     A paving mat as claimed in claim 9, in which each block is as claimed in any one of claims 3 to 6 and the blocks are roped together by at least one cable which extends along an edge of the rectangular contour of a block.

11.     A paving mat comprising a plurality of blocks roped together by at least one cable which extends along one side of at least a pair of adjacent blocks.

12.     A paving mat comprising a plurality of generally rectangular blocks which interlock in three dimensions and are roped together by at least one cable which extends along one side of at least a pair of adjacent blocks.

13.     A mat as claimed in claim 11 or claim 12, in which the cable extends between the said adjacent blocks.

14.     A mat as claimed in any one of claims 11 to 13, in which the blocks are roped together by at least one set of cables running parallel to each other.

15.     A mat as claimed in claim 14, in which the blocks are roped together by a second set of cables running perpendicular to the first set.

16.     A mat as claimed in any one of claims 11 to 15, in which each block is as claimed in any one of claims 1 to 8.

17.     A paving arrangement comprising an array of blocks and at least one cable extending between adjacent blocks.

18.     An arrangement as claimed in claim 17, in which each block is as claimed in any one of claims 3 to 6 and the cable extends along an edge of the rectangular
contour of the adjacent blocks.

0117638

1/4

**FIG.1.**

**FIG.2.**

**FIG.3.**

1

8c 8a 8c 8 8d 6a 6 6c 6d

8d 8d 6b 18

8b

FIG.4.

Fig.5.

Fig.6.

Fig.7.

Fig.8.

Fig.9.

Fig.10.

## European Patent Office

**EUROPEAN SEARCH REPORT**

**0117638**

Application number

EP 84 30 0513

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 435 735 (BURR) <br> * Page 6, paragraph 3 - page 16; figures 26, 55-76 * | 1,2,9 | E 02 B 3/14 <br> E 01 C 5/06 |
| X | FR-A- 386 901 (LUND) <br><br> * Complete document * | 1-6,9, 10 | |
| A | DE-U-7 141 046 (BAUTYPEN AG) <br> * Page 12, paragraph 2; figures 8, 9 * | 1,2 | |
| A | FR-A-2 277 936 (HODSON) | | |
| A | DE-C- 644 626 (STASSINET) | | TECHNICAL FIELDS SEARCHED (Int. Cl. ³) |
| A | US-A- 888 530 (PUGH) | | E 01 C 5/00 <br> E 02 B 3/00 |
| A | DE-U-1 964 688 (BRAUCKMANN) | | |
| A | DE-U-1 918 255 (MÄDER) | | |
| A | DE-U-6 609 614 (LEHNEN) | | |
| | --- -/- | | |

The present search report has been drawn up for all claims

| Place of search | Date of completion of the search | Examiner |
|---|---|---|
| BERLIN | 03-04-1984 | PAETZEL H-J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

**European Patent Office**

## EUROPEAN SEARCH REPORT

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl. 3) |
|---|---|---|---|
| A | DE-C- 821 045 (STEER-WEBSTER) ----- | | |
| | | | **TECHNICAL FIELDS SEARCHED (Int. Cl. 3)** |

The present search report has been drawn up for all claims

| Place of search | Date of completion of the search | Examiner |
|---|---|---|
| BERLIN | 03-04-1984 | PAETZEL H-J |